# EUROPEAN PATENT APPLICATION

(11) **EP 4 389 257 A1**
(43) Date of publication of application: **26.06.2024**
(21) Application number: 22216561.5
(22) Date of filing: 23.12.2022
(51) Int. Cl.: B01D 53/22, B01D 53/62, F28C 1/14, F28F 25/00

(54) **CO2 SEQUESTER SYSTEM FOR COOLING TOWERS**

(71) Applicant: Hitachi Energy Ltd, 8050 Zürich (CH)
(72) Inventor: SADR-MOMTAZI, Nima, 72240 Västerås (SE); HAJEK, Jan, 77732 Smedjebacken (SE)
(74) Representative: Vossius & Partner Patentanwälte Rechtsanwälte mbB

(57) **Abstract**

The present disclosure relates to a CO2 sequester system comprising a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan, wherein the CO2 sequester module is configured to separate CO2 from the ambient air that is at least one of received into the air inlet of the cooling fan and exited out of the outlet of the cooling fan. The present disclosure also relates to a method of separating CO2 from ambient air.

## Description

### Technical Field

The present disclosure relates to a CO2 sequester system for separating CO2 from an ambient air and the corresponding method.

### Background

In light of the recent climate changes, the CO2 emission control has attracted particular attention, and accordingly the regulations have been placed for industries exhibiting particularly high carbon footprints such as chemical or power generation industries. Such industries often involve generating heat at a stationary plant through an exothermic reaction, thereby producing CO2 as a by-product of an exothermic reaction which should be captured and further processed. In most cases, such stationary plant is accompanied by temperature control facility such as a cooling tower. A conventional CO2 sequester module may be implemented in such facility to achieve the required CO2 separation. However, the said implementation raises technical challenges, thusly a system level modification is required.

Thus, there is a need to improve a CO2 sequester system for separating CO2 from an ambient air and the corresponding method.

### Summary

The present disclosure relates to a CO2 sequester system comprising a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan, wherein the CO2 sequester module is configured to separate CO2 from the ambient air that is at least one of received into the air inlet of the cooling fan and exited out of the outlet of the cooling fan.

In an embodiment, the CO2 sequester system comprises a housing having a housing air inlet, and a housing air outlet configured to be coupled to the air inlet of the cooling fan.

In an embodiment, the CO2 sequester module is disposed within the housing.

In an embodiment, the ambient air is received in the air inlet of the housing and CO2-reduced air from the CO2 sequester module is delivered to the air inlet of the cooling fan via the housing air outlet.

In an embodiment, the CO2 sequester system comprises a housing having a housing air inlet configured to be coupled to the air outlet of the cooling fan, and a housing air outlet.

In an embodiment, the CO2 sequester module is disposed within the housing.

In an embodiment, the ambient air is delivered from the cooling fan through the air inlet of the housing and CO2-reduced air from the CO2 sequester is delivered from the housing via the housing air outlet.

In an embodiment, the CO2 sequester system comprises a heating system being thermally coupled to the CO2 sequester module.

In an embodiment, the heating system is configured to heat the CO2 sequester module.

In an embodiment, CO2 is flushed from the CO2 sequester module when the temperature of the CO2 sequester module surpasses a threshold temperature.

In an embodiment, the heating system comprises at least one exothermic module producing heat through an exothermic reaction process.

In an embodiment, at least part of the produced heat is guided through a medium to heat the CO2 sequester module.

In an embodiment, the heating system is configured to be thermally coupled to at least one exothermic module producing heat through an exothermic reaction process.

In an embodiment, at least part of the produced heat is guided through a medium to heat the CO2 sequester module.

In an embodiment, the CO2 sequester system comprises a medium cooling module thermally coupling the medium and coolant.

In an embodiment, the medium cooling module is configured to cool the medium based at least on a temperature-reduced coolant that is exiting the cooling tower.

In an embodiment, the coolant used by the medium cooling module to cool the medium re-enters the cooling tower after cooling the medium.

In an embodiment, the temperature of the CO2 sequester module achieved by a thermal exchange between the CO2 sequester module and the coolant re-entering the cooling tower, particularly after cooling the medium is below a threshold temperature, wherein CO2 is flushed from the CO2 sequester module when the temperature of the CO2 sequester module surpasses the threshold temperature.

In an embodiment, the at least one exothermic module comprises or is a power plant or a chemical plant producing the heat through an exothermic reaction process based on fossil-fuel, biomass-fuel, geothermal energy, nuclear energy, and/or renewable energy or the at least one exothermic module produces hydrogen, particularly through an electrolysis process.

In an embodiment, the CO2 sequester system comprises a temperature control system being configured to control the heating system to heat the CO2 sequester module to a desired setpoint temperature.

In an embodiment, the temperature control system is a control loop temperature control system.

In an embodiment, the control loop temperature control system comprises a temperature sensor configured to sense a temperature at the CO2 sequester module.

In an embodiment, the control loop temperature control system comprises a controller configured to compare the sensed temperature at the CO2 sequester module to the desired setpoint temperature to flush CO2 from the CO2 sequester module to determine if the CO2 sequester module requires further heating by heating system to the desired setpoint temperature to flush CO2 from the CO2 sequester module.

In an embodiment, the temperature control system is further configured to heat the CO2 sequester module prior to and/or during a CO2 flush period.

In an embodiment, the CO2 sequester module is a membrane and/or chemical CO2 sequester module.

The present disclosure also relates to a method for separating CO2 from an ambient air using a CO2 sequester system, the CO2 sequester system comprising a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan, the method comprising:
separating, by the CO2 sequester module, CO2 from the ambient air that is at least one of received into the air inlet of the cooling fan and exited out of the outlet of the cooling fan.

In an embodiment, the CO2 is separated from an ambient air using the CO2 sequester system according to any one of the embodiments described herein.

In an embodiment, the CO2 sequester system comprises a device comprising a processor being configured to separate the CO2 from an ambient air according to any one of the methods described herein.

Various exemplary embodiments of the present disclosure are directed to providing features that will become readily apparent by reference to the following description when taken in conjunction with the accompanying drawings. In accordance with various embodiments, exemplary systems, methods, and devices are disclosed herein. It is understood, however, that these embodiments are presented by way of example and not limitation, and it will be apparent to those of ordinary skill in the art who read the present disclosure that various modifications to the disclosed embodiments can be made while remaining within the scope of the present disclosure.

Thus, the present disclosure is not limited to the exemplary embodiments and applications described and illustrated herein. Additionally, the specific order and/or hierarchy of steps in the methods disclosed herein are merely exemplary approaches. Based upon design preferences, the specific order or hierarchy of steps of the disclosed methods or processes can be re-arranged while remaining within the scope of the present disclosure. Thus, those of ordinary skill in the art will understand that the methods and techniques disclosed herein present various steps or acts in a sample order, and the present disclosure is not limited to the specific order or hierarchy presented unless expressly stated otherwise.

In the following, exemplary embodiments of the present disclosure will be described. It is noted that some aspects of any one of the described embodiments may also be found in some other embodiments unless otherwise stated or obvious. However, for increased intelligibility, each aspect will only be described in detail when first mentioned and any repeated description of the same aspect will be omitted.

The above and other aspects and their implementations are described in greater detail in the drawings, the descriptions, and the claims.

### Brief Description of the Drawings

Fig. 1 illustrates a CO2 sequester system according to an embodiment of the present disclosure.
Fig. 2 a) illustrates a system level block diagram of a CO2 sequester system according to an embodiment of the present disclosure. Fig. 2b) illustrates a block diagram of a temperature control system according to an embodiment of the present disclosure.
Fig. 3 illustrates a flowchart of a method according to an embodiment of the present disclosure.

### Detailed Description of the Disclosure

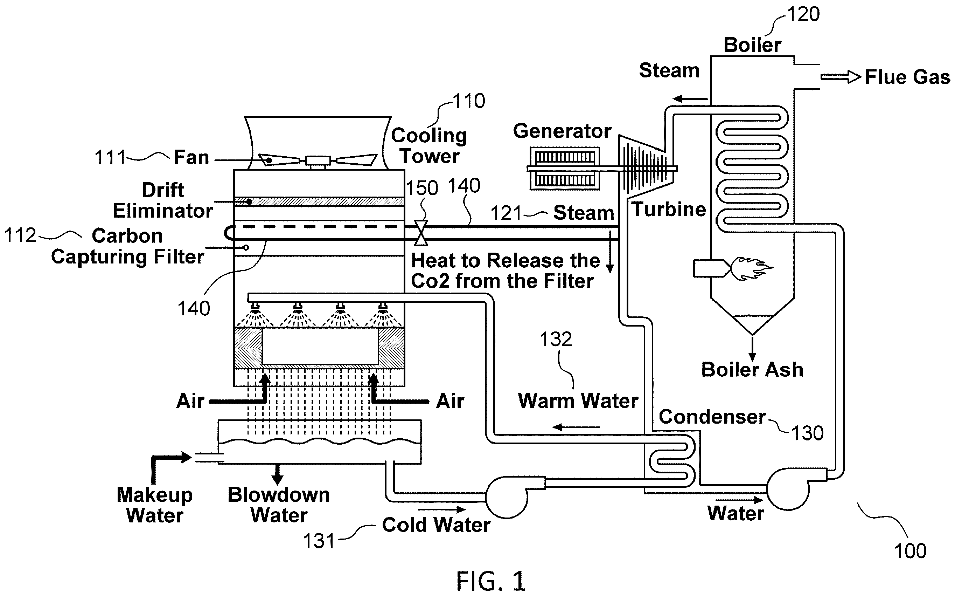

Fig. 1 illustrates a CO2 sequester system according to an embodiment of the present disclosure. The CO2 sequester system 100 comprises a CO2 sequester module 112 being coupled to at least one of an air inlet and an air outlet of a cooling fan 111 of a cooling tower 110 cooling a coolant, i.e., warm water 132 in Fig. 1, entering the cooling tower 110 based at least on the air received into the air inlet of the cooling fan 111 and exited out of the outlet of the cooling fan 111, wherein the CO2 sequester module 112 is configured to separate CO2 from the ambient air that is at least one of received into the air inlet of the cooling fan 111 and exited out of the outlet of the cooling fan 111.

With reference to Fig. 1, the CO2 sequester module 112 is coupled to an inner wall of the cooling tower such that the ambient air, that is at least one of received into the air inlet of the cooling fan 111 and exited out of the outlet of the cooling fan 111, passes through the CO2 sequester module 112. In an embodiment, the CO2 sequester module 112 is coupled to an air outlet of the cooling fan 111 such that the ambient air that is at least one of received into the air inlet of the cooling fan 111 and exited out of the outlet of the cooling fan 111 passes through the CO2 sequester module. In an embodiment, the CO2 sequester module 112 is supported by a supporting structure coupled to the inner wall of the cooling tower 110 or the outlet of the cooling fan 111. In another embodiment, the CO2 sequester system 100 comprises a housing having a housing air inlet, and a housing air outlet configured to be coupled to the air inlet of the cooling fan 111, and the CO2 sequester module 112 is disposed within the housing. In an embodiment, the ambient air is received in the air inlet of the housing and CO2-reduced air from the CO2 sequester module 112 is delivered to the air inlet of the cooling fan 111 via the housing air outlet. In yet another embodiment, the CO2 sequester system 100 comprises a housing having a housing air inlet configured to be coupled to the air outlet of the cooling fan 111, and a housing air outlet, and the CO2 sequester module 112 is disposed within the housing. In an embodiment, the ambient air is delivered from the cooling fan 111 through the air inlet of the housing and CO2-reduced air from the CO2 sequester is delivered from the housing via the housing air outlet. In an embodiment, the CO2 sequester module 112 is a membrane and/or chemical CO2 sequester module.

In an embodiment, the CO2 sequester system 100 comprises a heating system being thermally coupled to the CO2 sequester module 112, wherein the heating system is configured to heat the CO2 sequester module, and wherein CO2 is flushed from the CO2 sequester module when the temperature of the CO2 sequester module surpasses a threshold temperature. In reference to Fig. 1, the heating system comprises the boiler 120 (i.e., an exothermic module) producing heat through an exothermic reaction process. The boiler 120 comprises a water-carrying pipe that is being heated through the generated heat, which in turn turns the water in the pipe into steam. The steam is guided through a turbine coupled to an electrical generator and a part of the produced heat is guided through a heating pipe 140 in the form of steam 121 to heat the CO2 sequester module. The heating pipe 140 is wound around the CO2 sequester module 112, thusly the heating pipe 140 is thermally coupled to the CO2 sequester module 112. It is understood by the skilled person that a thermal coupling may or may not require a physical contact. The flow of the steam 121 through the heating pipe 140 is controlled through a valve 150. Once the CO2 sequester module 112 surpasses a threshold temperature, the CO2 sequester is configured to separate CO2 from the ambient air. In an embodiment, the separated CO2 is captured and/or guided to another module to be further processed and/or treated, in particular chemically. In an embodiment, the heating system is configured to be thermally coupled to at least one exothermic module producing heat through an exothermic reaction process, wherein at least part of the produced heat is guided through a medium to heat the CO2 sequester module.

The CO2 sequester system shown in Fig. 1 further comprises a condenser 130 thermally coupling the steam 121 generated based on the heat produced by the boiler 120. The condenser 130 cools the steam 121 by allowing cold water 131 exiting the cooling tower 110 to flow in a pipe running inside the condenser. The heat exchange between the steam 121 and the cold water 131 results heats the cold water 131 resulting in warm water 132. The warm water 132 re-enters the cooling tower 110 after cooling the steam 121. In an embodiment, the CO2 sequester module is thermally isolated from the warm water 132 re-entering the cooling tower 110 after cooling the steam 121. In an embodiment, the temperature of the CO2 sequester module 112 achieved by a thermal exchange between the CO2 sequester module and the warm water 132 is below the threshold temperature, above which CO2 is flushed from the CO2 sequester module. In an embodiment, the at least one exothermic module comprises or is a power plant or a chemical plant producing the heat through an exothermic reaction process based on fossil-fuel, biomass-fuel, geothermal energy, nuclear energy, and/or renewable energy or the at least one exothermic module produces hydrogen, particularly through an electrolysis process.

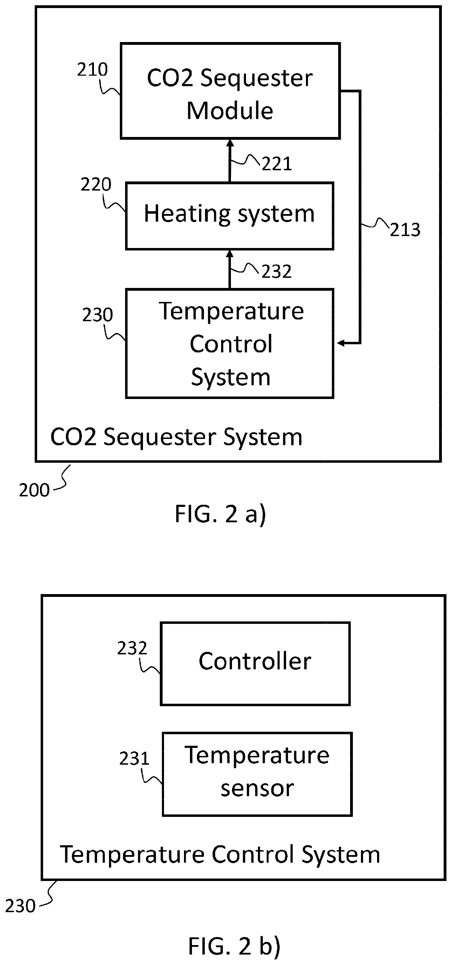

Fig. 2 a) illustrates a system level block diagram of a CO2 sequester system according to an embodiment of the present disclosure. The CO2 sequester system 200 comprises a temperature control system 230 being configured to control the heating system 220 to heat the CO2 sequester module 210 to a desired setpoint temperature. The temperature control system 230 may be a control loop temperature control system. As illustrated Fig. 2 b), the control loop temperature control system comprises a temperature sensor 231 configured to sense a temperature 213 at the CO2 sequester module 210, and the control loop temperature control system further comprises a controller 232 configured to compare the sensed temperature at the CO2 sequester module to the desired setpoint temperature to flush CO2 from the CO2 sequester module 210 to determine if the CO2 sequester module 210 requires further heating by heating system 220 to the desired setpoint temperature to flush CO2 from the CO2 sequester module. The temperature control system is further configured to produce a heat control signal 232 to transfer the heat 221 to the CO2 sequester module 210 prior to and/or during a CO2 flush period. In an embodiment, the CO2 sequester system 200 may be implemented as shown in Fig. 1 and the temperature control at the CO2 sequester module 210 may be achieved by controlling the steam valve 150. It is understood by the skilled person that the control system illustrated in Fig. 2 a) and Fig. 2 b) is a closed loop temperature control logic for a CO2 sequester module. It is further understood by the skilled person that the temperature of the CO2 sequester module may be controlled in an open loop manner, i.e., a temperature control system 230 generates a heat control signal 232 to cause the heating system 220 to heat the CO2 sequester module 210 without temperature information of the CO2 sequester module 210. In an embodiment, the CO2 sequester system further comprises a device comprising a processor being configured to separate the CO2 from an ambient air according to any one of the methods described herein.

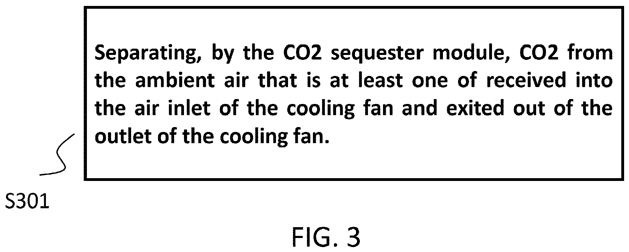

Fig. 3 illustrates a flowchart of a method according to an embodiment of the present disclosure. In particular, the method is a method for separating CO2 from an ambient air using a CO2 sequester system, the CO2 sequester system comprising a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan. At S301, CO2 is separated, by the CO2 sequester module, from the ambient air that is at least one of received into the air inlet of the cooling fan and exited out of the outlet of the cooling fan. In an embodiment, the CO2 is separated from an ambient air using the CO2 sequester system according to any one of the embodiments described herein.

In an embodiment, the CO2 sequester system comprises a housing having a housing air inlet, and a housing air outlet configured to be coupled to the air inlet of the cooling fan, wherein the CO2 sequester module is disposed within the housing, and the method further comprises receiving the ambient air in the air inlet of the housing; and delivering CO2-reduced air from the CO2 sequester module to the air inlet of the cooling fan via the housing air outlet.

In an embodiment, the CO2 sequester system comprises a housing having a housing air inlet configured to be coupled to the air outlet of the cooling fan, and a housing air outlet, wherein the CO2 sequester module is disposed within the housing, and he method further comprises delivering the ambient air from the cooling fan through the air inlet of the housing; and delivering CO2-reduced air from the CO2 sequester from the housing via the housing air outlet.

In an embodiment, the CO2 sequester system comprises a heating system being thermally coupled to the CO2 sequester module, and the method comprises heating, by the heating system, the CO2 sequester module.

In an embodiment, the method comprises flushing CO2 from the CO2 sequester module when the temperature of the CO2 sequester module surpasses a threshold temperature.

In an embodiment, the heating system comprises at least one exothermic module producing heat through an exothermic reaction process, and the method comprises guiding at least part of the produced heat through a medium to heat the CO2 sequester module.

In an embodiment, the method comprises thermally coupling the heating system to at least one exothermic module producing heat through an exothermic reaction process.

In an embodiment, the method comprises guiding at least part of the produced heat through a medium to heat the CO2 sequester module.

In an embodiment, the CO2 sequester system comprises a medium cooling module thermally coupling the medium and coolant, and the method comprises configuring the medium cooling module to cool the medium based at least on a temperature-reduced coolant that is exiting the cooling tower; and cooling, by the medium cooling module, the medium based at least on a temperature-reduced coolant.

In an embodiment, the coolant used by the medium cooling module to cool the medium re-enters the cooling tower after cooling the medium.

In an embodiment, the at least one exothermic module comprises or is a power plant or a chemical plant producing the heat through an exothermic reaction process based on fossil-fuel, biomass-fuel, geothermal energy, nuclear energy, and/or renewable energy or the at least one exothermic module produces hydrogen, particularly through an electrolysis process.

In an embodiment, the method comprises controlling the heating system to heat the CO2 sequester module to a desired setpoint temperature.

In an embodiment, the temperature control system is a control loop temperature control system, the control loop temperature control system comprises a temperature sensor, the method comprises sensing, by the temperature sensor, a temperature at the CO2 sequester module.

In an embodiment, the method comprises controlling the sensed temperature at the CO2 sequester module to the desired setpoint temperature to flush CO2 from the CO2 sequester module; and determining if the CO2 sequester module requires further heating by heating system to the desired setpoint temperature to flush CO2 from the CO2 sequester module.

In an embodiment, the method comprises heating the CO2 sequester module prior to and/or during a CO2 flush period.

In an embodiment, the CO2 sequester module is a membrane and/or chemical CO2 sequester module.

While various embodiments of the present disclosure have been described above, it should be understood that they have been presented by way of example only, and not by way of limitation. Likewise, the various diagrams may depict an example architectural or configuration, which are provided to enable persons of ordinary skill in the art to understand exemplary features and functions of the present disclosure. Such persons would understand, however, that the present disclosure is not restricted to the illustrated example architectures or configurations, but can be implemented using a variety of alternative architectures and configurations. Additionally, as would be understood by persons of ordinary skill in the art, one or more features of one embodiment can be combined with one or more features of another embodiment described herein. Thus, the breadth and scope of the present disclosure should not be limited by any of the above-described exemplary embodiments.

It is also understood that any reference to an element herein using a designation such as "first," "second," and so forth does not generally limit the quantity or order of those elements. Rather, these designations can be used herein as a convenient means of distinguishing between two or more elements or instances of an element. Thus, a reference to first and second elements does not mean that only two elements can be employed, or that the first element must precede the second element in some manner.

Additionally, a person having ordinary skill in the art would understand that information and signals can be represented using any of a variety of different technologies and techniques. For example, data, instructions, commands, information, signals, bits and symbols, for example, which may be referenced in the above description can be represented by voltages, currents, electromagnetic waves, magnetic fields or particles, optical fields or particles, or any combination thereof.

A skilled person would further appreciate that any of the various illustrative logical blocks, units, processors, means, circuits, methods and functions described in connection with the aspects disclosed herein can be implemented by electronic hardware (e.g., a digital implementation, an analog implementation, or a combination of the two), firmware, various forms of program or design code incorporating instructions (which can be referred to herein, for convenience, as "software" or a "software unit"), or any combination of these techniques.

To clearly illustrate this interchangeability of hardware, firmware and software, various illustrative components, blocks, units, circuits, and steps have been described above generally in terms of their functionality. Whether such functionality is implemented as hardware, firmware or software, or a combination of these techniques, depends upon the particular application and design constraints imposed on the overall system. Skilled artisans can implement the described functionality in various ways for each particular application, but such implementation decisions do not cause a departure from the scope of the present disclosure. In accordance with various embodiments, a processor, device, component, circuit, structure, machine, unit, etc. can be configured to perform one or more of the functions described herein. The term "configured to" or "configured for" as used herein with respect to a specified operation or function refers to a processor, device, component, circuit, structure, machine, unit, etc. that is physically constructed, programmed and/or arranged to perform the specified operation or function.

Furthermore, a skilled person would understand that various illustrative methods, logical blocks, units, devices, components and circuits described herein can be implemented within or performed by an integrated circuit (IC) that can include a general purpose processor, a digital signal processor (DSP), an application specific integrated circuit (ASIC), a field programmable gate array (FPGA) or other programmable logic device, or any combination thereof. The logical blocks, units, and circuits can further include antennas and/or transceivers to communicate with various components within the network or within the device. A general purpose processor can be a microprocessor, but in the alternative, the processor can be any conventional processor, controller, or state machine. A processor can also be implemented as a combination of computing devices, e.g., a combination of a DSP and a microprocessor, a plurality of microprocessors, one or more microprocessors in conjunction with a DSP core, or any other suitable configuration to perform the functions described herein. If implemented in software, the functions can be stored as one or more instructions or code on a computer-readable medium. Thus, the steps of a method or algorithm disclosed herein can be implemented as software stored on a computer-readable medium.

Computer-readable media includes both computer storage media and communication media including any medium that can be enabled to transfer a computer program or code from one place to another. A storage media can be any available media that can be accessed by a computer. By way of example, and not limitation, such computer-readable media can include RAM, ROM, EEPROM, CD-ROM or other optical disk storage, magnetic disk storage or other magnetic storage devices, or any other medium that can be used to store desired program code in the form of instructions or data structures and that can be accessed by a computer.

Additionally, memory or other storage, as well as communication components, may be employed in embodiments of the present disclosure. It will be appreciated that, for clarity purposes, the above description has described embodiments of the present disclosure with reference to different functional units and processors. However, it will be apparent that any suitable distribution of functionality between different functional units, processing logic elements or domains may be used without detracting from the present disclosure. For example, functionality illustrated to be performed by separate processing logic elements, or controllers, may be performed by the same processing logic element, or controller. Hence, references to specific functional units are only references to a suitable means for providing the described functionality, rather than indicative of a strict logical or physical structure or organization.

Various modifications to the implementations described in this disclosure will be readily apparent to those skilled in the art, and the general principles defined herein can be applied to other implementations without departing from the scope of this disclosure. Thus, the disclosure is not intended to be limited to the implementations shown herein, but is to be accorded the widest scope consistent with the novel features and principles disclosed herein, as recited in the claims below.

## Claims

1. A CO2 sequester system comprising:
a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan,
wherein the CO2 sequester module is configured to separate CO2 from the ambient air that is at least one of received into the air inlet of the cooling fan and exited out of the outlet of the cooling fan.

2. The CO2 sequester system of claim 1, comprising:
a housing having a housing air inlet, and a housing air outlet configured to be coupled to the air inlet of the cooling fan,
wherein the CO2 sequester module is disposed within the housing, and
wherein the ambient air is received in the air inlet of the housing and CO2-reduced air from the CO2 sequester module is delivered to the air inlet of the cooling fan via the housing air outlet.

3. The CO2 sequester system of claim 1, comprising:
a housing having a housing air inlet configured to be coupled to the air outlet of the cooling fan, and a housing air outlet,
wherein the CO2 sequester module is disposed within the housing, and
wherein the ambient air is delivered from the cooling fan through the air inlet of the housing and CO2-reduced air from the CO2 sequester is delivered from the housing via the housing air outlet.

4. The CO2 sequester system of any one of claims 1 to 3, comprising:
a heating system being thermally coupled to the CO2 sequester module,
wherein the heating system is configured to heat the CO2 sequester module, and
wherein CO2 is flushed from the CO2 sequester module when the temperature of the CO2 sequester module surpasses a threshold temperature.

5. The CO2 sequester system of claim 4, wherein
the heating system comprises at least one exothermic module producing heat through an exothermic reaction process, and
at least part of the produced heat is guided through a medium to heat the CO2 sequester module.

6. The CO2 sequester system of claim 4, wherein
the heating system is configured to be thermally coupled to at least one exothermic module producing heat through an exothermic reaction process, and
at least part of the produced heat is guided through a medium to heat the CO2 sequester module.

7. The CO2 sequester system of 5 or 6, comprising:
a medium cooling module thermally coupling the medium and coolant,
wherein the medium cooling module is configured to cool the medium based at least on a temperature-reduced coolant that is exiting the cooling tower.

8. The CO2 sequester system of claim 7, wherein
the coolant used by the medium cooling module to cool the medium re-enters the cooling tower after cooling the medium.

9. The CO2 sequester system of any one of claims 5 to 8, wherein
the at least one exothermic module comprises or is a power plant or a chemical plant producing the heat through an exothermic reaction process based on fossil-fuel, biomass-fuel, geothermal energy, nuclear energy, and/or renewable energy or the at least one exothermic module produces hydrogen, particularly through an electrolysis process.

10. The CO2 sequester system of any one of claims 4 to 9, comprising:
a temperature control system being configured to control the heating system to heat the CO2 sequester module to a desired setpoint temperature.

11. The CO2 sequester system of claim 10, wherein
the temperature control system is a control loop temperature control system, and
the control loop temperature control system comprises a temperature sensor configured to sense a temperature at the CO2 sequester module.

12. The CO2 sequester system of claim 11, wherein
the control loop temperature control system comprises a controller configured to compare the sensed temperature at the CO2 sequester module to the desired setpoint temperature to flush CO2 from the CO2 sequester module to determine if the CO2 sequester module requires further heating by heating system to the desired setpoint temperature to flush CO2 from the CO2 sequester module.

13. The CO2 sequester system of any one of claims 10 to 12, wherein
the temperature control system is further configured to heat the CO2 sequester module prior to and/or during a CO2 flush period.

14. The CO2 sequester system of any of claims 1 to 13, wherein the CO2 sequester module is a membrane and/or chemical CO2 sequester module.

15. A method for separating CO2 from an ambient air using a CO2 sequester system, the CO2 sequester system comprising a CO2 sequester module being coupled to at least one of an air inlet and an air outlet of a cooling fan of a cooling tower cooling a coolant entering the cooling tower based at least on the air received into the air inlet of the cooling fan and exited out of the outlet of the cooling fan, the method comprising:
separating, by the CO2 sequester module, CO2 from the ambient air that is at least one of received into the air inlet of the cooling fan and exited out of the outlet of the cooling fan.

16. The method of claim 15, wherein the CO2 is separated from an ambient air using the CO2 sequester system of any one of claims 2 to 14.
